(19) Europäisches Patentamt
European Patent Office
Office européen des brevets

(11) EP 0 739 897 A1

# (12) EUROPÄISCHE PATENTANMELDUNG

(43) Veröffentlichungstag:
**30.10.1996 Patentblatt 1996/44**

(51) Int. Cl.$^6$: **C07F 17/00**, C08F 10/00

(21) Anmeldenummer: **96105605.8**

(22) Anmeldetag: **10.04.1996**

(84) Benannte Vertragsstaaten:
**AT BE DE ES FI FR GB IT NL SE**

(30) Priorität: **27.04.1995 DE 19514301**
**06.06.1995 DE 19520599**

(71) Anmelder: **HOECHST AKTIENGESELLSCHAFT**
**65929 Frankfurt am Main (DE)**

(72) Erfinder:
- **Aulbach, Michael, Dr.**
  **65719 Hofheim (DE)**
- **Brekner, Michael-Joachim, Dr.**
  **65760 Eschborn (DE)**
- **Küber, Frank, Dr.**
  **61440 Oberursel (DE)**
- **Zenk, Roland, Dr.**
  **65812 Bad Soden (DE)**

Bemerkungen:
Ein Antrag gemäss Regel 88 EPÜ auf Berichtigung der Beschreibung usw. liegt vor. Über diesen Antrag wird im Laufe des Verfahrens vor der Prüfungsabteilung eine Entscheidung getroffen werden (Richtlinien für die Prüfung im EPA, A-V, 3.).

## (54) Mehrkernige Metallocenverbindung, Verfahren zu ihrer Herstellung und ihre Anwendung als Katalysator

(57) Die vorliegende Erfindung bezieht sich auf eine Metallocenverbindung mit mindestens zwei voneinander verschiedenen Metallocenfragmenten L-$MX_2$-L, welche die Formel I hat,

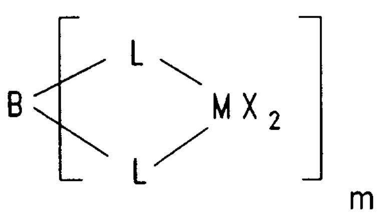

( I )

worin B eine Verbrückung bedeutet, m eine ganze Zahl von 2 bis 100 000 ist,

M ein Metallatom der Gruppe IVb, Vb oder VIb des Periodensystems der Elemente bedeutet,
X unabhängig voneinander in einem Metallocenfragment L-$MX_2$-L gleich oder verschieden sind und Wasserstoff, eine $C_1$-$C_{40}$-kohlenwasserstoffhaltige Gruppe, eine OH-Gruppe, ein Halogenatom oder ein Pseudohalogen bedeuten, L unabhängig voneinander in gleichen oder verschiedenen Metallocenfragmenten gleich oder verschieden sind und einen $\pi$-Liganden oder einen anderen Elektronendonor bedeuten.

Die Metallocenverbindung kann vorteilhaft als Katalysatorkomponente zur Olefinpolymerisation eingesetzt werden.

EP 0 739 897 A1

Printed by Rank Xerox (UK) Business Services
2.13.8/3.4

## Beschreibung

Die vorliegende Erfindung bezieht sich auf eine mehrkernige Metallocenverbindung, die sich als Katalysatorkomponente bei der Herstellung von Polyolefinen eignet. Die Erfindung bezieht sich außerdem auf ein Verfahren zur Herstellung dieser Metallocene. Die Erfindung bezieht sich darüber hinaus auf ein Verfahren zur Herstellung von Polyolefinen unter Verwendung der erfindungsgemäßen Metallocenverbindung.

Aus der Literatur ist die Herstellung von Polyolefinen mit löslichen Metallocenverbindungen in Kombination mit Aluminoxanen oder anderen Cokatalysatoren, die aufgrund ihrer Lewis-Acidität das neutrale Metallocen in ein Kation überführen und stabilisieren können, bekannt.

Lösliche Metallocenverbindungen auf der Basis von Bis(cyclopentadienyl)zirkondialkyl bzw. dihalogenid in Kombination mit oligomeren Aluminoxanen können Ethylen mit guter und Propylen mit mäßiger Aktivität polymerisieren. Man erhält Polyethylen mit enger Molmassenverteilung und mittlerer Molmasse. Das auf diese Weise hergestellte Polypropylen ist in der Regel ataktisch und hat eine relativ niedrige Molmasse.

Die Herstellung von isotaktischem Polypropylen gelingt mit Hilfe des Ethylenbis(4,5,6,7-tetrahydro-1-indenyl)zirkoniumdichlorids zusammen mit einem Aluminoxan in einer Suspensionspolymerisation (EP 185 918). Das Polymer besitzt eine enge Molmassenverteilung. Der Nachteil dieses Verfahrens ist, daß bei technisch relevanten Polymerisationstemperaturen nur Polymere mit sehr niedriger Molmasse hergestellt werden können.

Weiterhin sind Katalysatoren auf der Basis von Ethylenbisindenylhafniumdichlorid und Ethylenbis(4,5,6,7-tetrahydro-1-indenyl)hafniumdichlorid und Methylaluminoxan bekannt, mit denen durch Suspensionspolymerisation höhermolekulare Polypropylene hergestellt werden können (J. Am. Chem. Soc. (1987), 109, 6544). Unter technisch relevanten Polymerisationsbedingungen ist jedoch die Kornmorphologie der derart erzeugten Polymere nicht befriedigend und die Aktivität der eingesetzten Katalysatorsysteme vergleichsweise gering. Außerdem weisen diese Systeme hohe Katalysatorkosten auf, so daß mit diesen Systemen eine kostengünstige Polymerisation nicht möglich ist.

Eine deutliche Steigerung der Molmasse konnte durch die Verwendung von Metallocenen erreicht werden, bei denen die durch eine Brücke fixierten Indenylliganden in 2-Stellung (EP 485 822) oder in 2- und 4-Stellung (EP 530 647) Substituenten tragen.

Eine weitere Steigerung der Molmasse wurde durch die Verwendung von Indenylliganden mit Substituenten in 2-, 4- und 6-Stellung (EP 545 303) sowie aromatischer $\pi$-Liganden vom 4,5-Benzoindenyltyp erreicht (EP 549 900).

Ein Nachteil im Fall der stereospezifischen Polymerisation prochiraler Monomere, z. B von Propylen, mit Metallocenkatalysatoren ist die relativ niedrige Isotaxie, die sich im Falle von isotaktischem Polypropylen in niedrigen Schmelzpunkten auswirkt. Insbesondere Metallocene mit Substituenten in 2- und 4-Stellung und speziell rac-Dimethylsilylbis(2-methyl-4-isopropyl-indenyl)zirkoniumdichlorid in Kombination mit Methylaluminoxan liefern im Fall von Propylen ein Polymer mit hoher Isotaktizität und daher hohem Schmelzpunkt (EP 530 647). Eine weitere Steigerung der Schmelzpunkte wurde durch die Verwendung von 4-Aryl substituierten Bisindenylsystemen erreicht (EP 576 970).

Es gibt allerdings auch technische Anwendungen, bei denen niedrige Schmelzpunkte erwünscht sind.

Ein Nachteil bei der Verwendung löslicher (homogener) Metallocen-Methylaluminoxan-Katalysatorsysteme in Verfahren, bei denen das gebildete Polymer als Feststoff anfällt, ist die Ausbildung von starken Belägen an Reaktorwänden und Rührer. Diese Beläge entstehen durch Agglomeration der Polymerpartikel, wenn das Metallocen, oder Aluminoxan, oder beide gelöst im Suspensionsmedium vorliegen. Derartige Beläge in den Reaktorsystemen müssen regelmäßig entfernt werden, da diese rasch erhebliche Stärken erreichen, eine hohe Festigkeit besitzen und den Wärmeaustausch zum Kühlmedium verhindern.

Zur Vermeidung von Reaktorbelägen können Metallocene geträgert werden. Verfahren dazu sind bekannt (EP 578 838). Aus technischen Gründen wäre es vorteilhaft, auf den zusätzlichen Verfahrensschritt der Trägerung zu verzichten. Aus EP 528 041 sind zweikernige Metallocene bekannt, die sich zur Herstellung syndiotaktischer Polymere mit niedrigem Molekulargewicht eignen.

In vielen Publikationen, Metallocene betreffend, wird darauf hingewiesen, daß sich auch Metallocen-Mischungen zur Polymerisation von Olefinen eignen. Bei der Verwendung vor geträgerten Metallocen-Mischungen treten allerdings folgende Schwierigkeiten auf:

a) Werden Mischungen geträgerter Metallocene eingesetzt, d. h. auf jedem Träger-Partikel befindet sich nur ein Metallocen-Typ, so werden uneinheitliche Korngrößenverteilungen im Reaktor erhalten, was die Polymerisation und die anschließende Aufarbeitung der Polymerisationsprodukte hinsichtlich des Durchsatzes und der Störanfälligkeit negativ beeinflußt (z. B. Begrenzung des Feststoffanteils bei der Polymerisation in einem flüssigen Medium; Instabilität des Wirbelbetts bei Gasphasenverfahren; Belagsbildung; ungleichmäßige Partikelabtrennung in Zyklonen). Darüber hinaus wird als Polymerisationsprodukt eine Mischung aus Körnern erhalten, die jeweils aus einem einheitlichen Polymer bestehen, so daß die Mischung in einem weiteren Extrudierschritt in der Schmelze homogenisiert werden muß. Eine solche Homogenisierung ist mit zunehmendem Unterschied zwischen den Polymeren der einzelnen Körner (z. B. Molekulargewicht, Viskosität) und steigendem Granulierdurchsatz immer weniger vollkommen. Inhomogenitäten der entsprechenden Polyolefine sind die Folge.

b) Werden Metallocen-Mischungen als solche geträgert, d. h. auf jedem Träger-Partikel befinden sich mindestens zwei unterschiedliche Metallocen-Typen, besteht das Problem, eine bestimmte Zusammensetzung der Mischung einzustellen, da sich in Abhängigkeit von der Trägerungsmethode und den Trägerungsbedingungen die Zusammensetzung der Mischung der auf dem Träger fixierten Metallocene ändert.

Es bestand somit die Aufgabe, ein Katalysatorsystem zu finden, das die Nachteile des Standes der Technik überwindet.

Es wurde überraschend gefunden, daß mehrkernige Metallocenverbindungen, die mindestens zwei voneinander verschiedene Metallocenfragmente enthalten, diese Aufgabe lösen.

Die vorliegende Erfindung betrifft somit eine mehrkernige Metallocenverbindung mit mindestens zwei voneinander verschiedenen Metallocenfragmenten $L\text{-}MX_2\text{-}L$, welche die Formel I hat

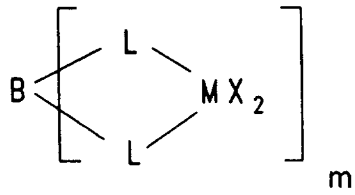

(I)

worin B eine Verbrückung bedeutet, m eine ganze Zahl von 2 bis 100 000, vorzugsweise 2 bis 10 ist, M ein Metallatom der Gruppe IVb, Vb oder VIb des Periodensystems der Elemente bedeutet, X unabhängig voneinander in einem Metallocenfragment $L\text{-}MX_2\text{-}L$ gleich oder verschieden sind und Wasserstoff, eine $C_1$-$C_{40}$-kohlenwasserstoffhaltige Gruppe, eine OH-Gruppe, ein Halogenatom oder ein Pseudohalogen bedeuten, L unabhängig voneinander in einem Metallocenfragment $L\text{-}MX_2\text{-}L$ gleich oder verschieden sind und einen $\pi$-Liganden oder einen anderen Elektronendonor bedeuten.

Die m Metallocenfragmente $L\text{-}MX_2\text{-}L$ sind voneinander verschieden oder gleich, wobei mindestens zwei der m Metallocenfragmente $L\text{-}MX_2\text{-}L$ voneinander verschieden sind. Zwei Metallocenfragmente $L\text{-}MX_2\text{-}L$ können sich in einem oder mehreren der Strukturelemente L, M und X voneinander unterscheiden.

Beispiele für M sind Titan, Zirkonium, Hafnium, Vanadium, Niob, Tantal, Chrom, Molybdän oder Wolfram. Bevorzugt sind Metallocene der Gruppe IVb des Periodensystems der Elemente wie Zirkonium, Hafnium und Titan.

Die Reste X bedeuten ein Wasserstoffatom, eine $C_1$-$C_{40}$-kohlenwasserstoffhaltige Gruppe wie eine $C_1$-$C_{10}$-, vorzugsweise $C_1$-$C_4$-Alkylgruppe, eine $C_1$-$C_{10}$-, vorzugsweise $C_1$-$C_3$-Alkoxygruppe, eine $C_6$-$C_{10}$-, vorzugsweise $C_6$-$C_8$-Aryl, eine $C_6$-$C_{10}$-, vorzugsweise $C_6$-$C_8$-Aryloxygruppe, eine $C_2$-$C_{10}$-, vorzugsweise $C_2$-$C_4$-Alkenylgruppe, eine $C_7$-$C_{40}$-, vorzugsweise $C_7$-$C_{12}$-Arylalkylgruppe, eine $C_7$-$C_{40}$-, vorzugsweise $C_7$-$C_{12}$-Alkylarylgruppe, eine $C_8$-$C_{40}$-, vorzugsweise $C_8$-$C_{12}$-Arylalkenylgrupe, eine OH-Gruppe, ein Halogenatom, wie Fluor, Chlor, Brom oder Jod vorzugsweise Chlor oder ein Pseudohalogen wie Nitril.

Die Liganden L sind bevorzugt jeweils ein $\pi$-Ligand wie eine substituierte oder unsubstituierte Cyclopentadienylidengruppe oder ein Elektronendonor wie O, S, $PR^4$ oder $NR^4$, worin $R^4$ für ein Wasserstoffatom oder einen $C_1$-$C_{30}$-Kohlenwasserstoffrest wie $C_1$-$C_{20}$-Alkyl oder $C_6$-$C_{14}$-Aryl steht.

Beispiele für L sind:

Tert.-butylamido, Cyclohexylamido, Phenylamido, 2,6-Diisopropylphenylamido, 2,6-Ditert.-butylphenylamido, Cyclododecylamido, Cyclopentadienyliden, oder substituierte Cyclopentadienylidengruppen wie Tetramethylcyclopentadienyliden, Methylcyclopentadienyliden, Methyl-tert.-butylcyclopentadienyliden, Tert.-butylcyclopentadienyliden, Isopropylcyclopentadienyliden, Dimethylcyclopentadienyliden, Trimethylcyclopentadienyliden, Trimethylethylcyclopentadienyliden, Phenylcyclopentadienyliden, Diphenylcyclopentadien- yliden, Indenyliden, 2-Methylindenyliden, 2-Ethylindenyliden, 3-Methylindenyliden, 3-tert.-Butylindenyliden, 3-Trimethylsilylindenyliden, 2-Methyl-4-phenyl-indenyliden, 2-Ethyl-4-phenylindenyliden, 2-Methyl-4-naphthylindenyliden, 2-Methyl-4-isopropylindenyliden, 4,5-Benzoindenyliden, 2-Methyl-4,5benzoindenyliden, 2-Methyl-a-acenaphthylindenyliden, 2-Methyl-4,6-diisopropylindenyliden, Fluorenyliden, 4-Methylfluorenyliden oder 2,7-Di-tert.-butylfluorenyliden.

Für m = 2 ist B bevorzugt

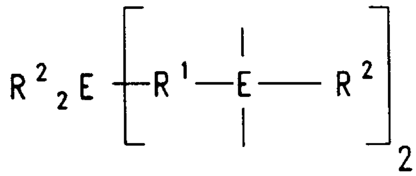 ,

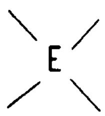 , 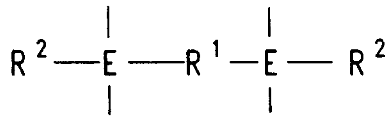 , 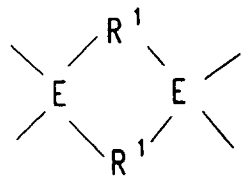

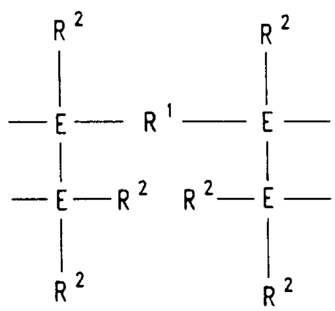 oder 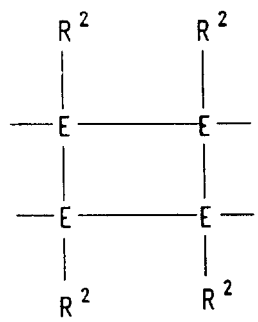

worin die Reste $R^1$ gleich oder verschieden sind und jeweils eine zweibindige $C_1$-$C_{40}$-kohlenwasserstoffhaltige Verbrückung sind, die auch ein oder mehrere Heteroatome wie O, S, Si, Ge, N, P oder B enthalten können, die Reste $R^2$ gleich oder verschieden sind und ein Wasserstoffatom, ein Halogenatom oder ein $C_1$-$C_{40}$-kohlenwasserstoffhaltiger Rest sind, und E gleich oder verschieden, unabhängig voneinander die Atome Kohlenstoff, Silicium, Germanium oder Zinn sind.

Vorzugsweise steht B für

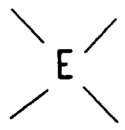 , 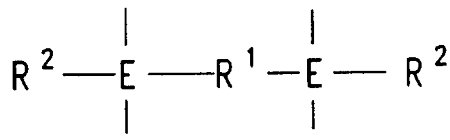 , 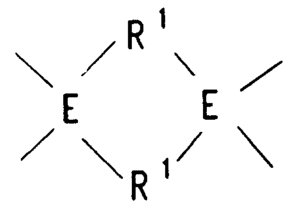

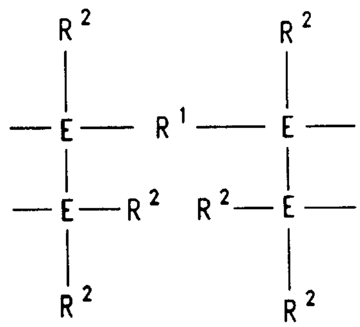 oder 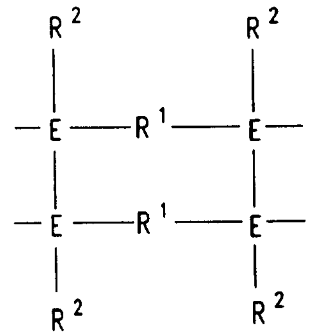

,worin die Reste $R^1$ gleich oder verschieden sind und zweibindige $C_1$-$C_{40}$-Alkandiyl-, $C_1$-$C_{10}$-Fluoralkandiyl, $C_6$-$C_{10}$-Arylen, $C_6$-$C_{10}$-Fluorarylen-, $C_7$-$C_{20}$-Alkylarylen-, $C_7$-$C_{20}$-Arylalkandiyl-, $C_2$-$C_{10}$-Alkendiyl- oder $C_8$-$C_{20}$-Arylalkendiylgruppe bedeuten, die linear, verzweigt oder cyclisch sein können und die auch Heteroatome wie O, S, Si, N, P oder B enthalten können.

Für m > 2 ist B bevorzugt

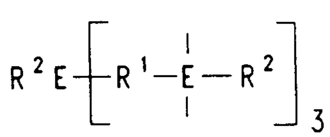 , 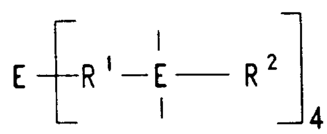 ,

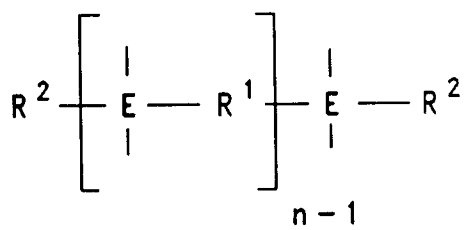 oder 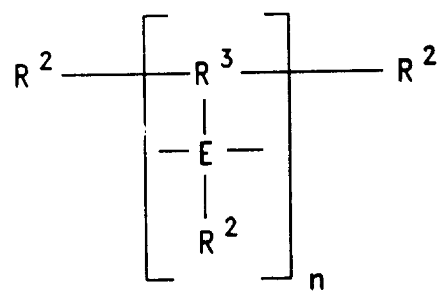

worin die Reste $R^1$ gleich oder verschieden sind und jeweils eine zweibindige $C_1$-$C_{40}$-kohlenwasserstoffhaltige Verbrückung sind, die auch ein oder mehrere Heteroatome wie O, S, Si, Ge, N, P oder B enthalten können, die Reste $R^2$ gleich oder verschieden sind und ein Wasserstoffatom, ein Halogenatom oder ein $C_1$-$C_{40}$-kohlenwasserstoffhaltiger Rest sind, $R^3$ ein dreibindiger $C_1$-$C_{40}$-kohlenwasserstoffhaltiger Rest ist, n = m ist, und E gleich oder verschieden, unabhängig voneinander die Atome Kohlenstoff, Silicium, Germanium oder Zinn sind.

An den in den Formeln für B offengelassenen Bindungsstellen von E sitzen die Gruppen L.

Beispiele für $R^1$ sind:

1,2-Ethandiyl, 1,3-Propandiyl, 1,4-Butandiyl, 1,6-Hexandiyl, Ethyliden, 2-Methyl-4-phenoxy-1,7-octandiyl, 2,5-Cyclooctandiyl, 1,4-Phenylen, p-Xylylen, m-Xylylen, o-Xylylen oder $(SiMe_2)_x$, wobei x eine ganze Zahl von 0 bis 100 ist.

Die Reste $R^2$ können gleich oder verschieden sein und stehen beispielsweise für jeweils ein Wasserstoffatom, ein Halogenatom, einen kohlenwasserstoffhaltigen $C_1$-$C_{40}$-Rest wie eine $C_1$-$C_{10}$-Alkylgruppe, eine $C_1$-$C_{10}$-Fluoralkylgruppe, eine $C_6$-$C_{20}$-, vorzugsweise $C_6$-$C_{10}$-Aryl-, eine $C_6$-$C_{10}$-Fluorarylgruppe, eine $C_1$-$C_{10}$-, vorzugsweise $C_1$-$C_4$-Alkoxygruppe, eine $C_6$-$C_{10}$-Aryloxy-, eine $C_2$-$C_{10}$-, vorzugsweise $C_2$-$C_4$-Alkenylgruppe, $C_8$-$C_{12}$-, vorzugsweise $C_8$-$C_{40}$-Arylalkenylgruppe oder eine $C_7$-$C_{40}$-, vorzugsweise $C_7$-$C_{12}$-Alkylarylgruppe.

Beispiele für $R^2$ sind:

Wasserstoff, Chlor, Brom, Methyl, Ethyl, $CF_3$, Methoxy, Pentafluorphenyl, $Si(Methyl)_3$, tert-Butyl, Phenyl, p-Tolyl, Mesityl, iso-Propyl, 1-Decyl oder Vinyl.

$R^3$ steht für einen dreibindigen kohlenwasserstoffhaltigen $C_1$-$C_{40}$-Rest, bevorzugt einen $C_1$-$C_{40}$-Kohlenwasserstoffrest, besonders bevorzugt für eine dreibindige $C_7$-$C_{40}$-Alkantriyl-, $C_1$-$C_{40}$-Alkylarentriyl-, $C_6$-$C_{40}$-Arylalkantriyl-, $C_2$-$C_{40}$-Alkentriyl- oder $C_8$-$C_{40}$-Arylalkentriylgruppe.

Beispiele für $R^3$ sind:

1,2,2-Ethantriyl, 1,4,4-Butantriyl, 1,6,6-Hexantriyl, 1,8,8-Octantriyl, 1,10,10-Decantriyl, 2,4-Dimethyl-1,6,6-Hexantriyl, 3,5,7-Tributyl-1,8,8-octantriyl, 2,4,7-Triphenyl-1,8,8-octantriyl, 2-Ethyl-1,4,4-butantriyl.

Die Atome E sind unabhängig von anderen im Molekül enthaltenen Atomen E gleich oder verschieden und sind bevorzugt Kohlenstoff und/oder Silicium.

Für die Substituentenposition an bevorzugten Cyclopentadienylidenliganden L gilt folgende Nomenklatur:

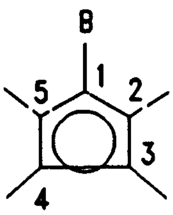
;
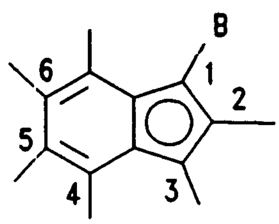
;
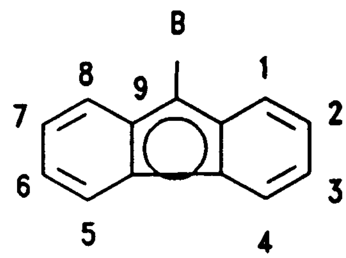

Die folgenden Beispiele sollen die in der allgemeinen Formel I beschriebenen Verbindungen näher erläutern, haben jedoch keinen limitierenden Charakter:

Tetrachloro-[1-[bis(η⁵5-1H-inden-1-yliden)methylsilyl]-3-(η⁵-cyclopenta-2,4-dien-1-yliden)-3-(η⁵-9H-fluoren-9-yliden)butan]di-zirconium

Tetrachloro-[2-[bis(η⁵-2-methyl-1H-inden-1-yliden)methoxysilyl]-5-(η⁵-2,3,4,5-tetramethylcyclopenta-2,4-dien-1-yliden)-5(η⁵-9H-fluoren-9-yliden)hexan]di-zirconium

Tetrachloro-[1-[bis(η⁵-2-methyl-4-phenyl-1H-inden-1-yliden)phenylgermyl]-6-(η⁵-cyclopenta-2,4-dien-1-yliden)-6-(η⁵-9H-fluoren-9-yliden)hexan]di-zirconium Tetrachloro-[1-[bis(η⁵-4-chloro-2-methyl-1H-inden-1-yliden)ethylsilyl]-4,5-bis(η⁵-2,7-di-tert-butyl-9H-fluoren-9-yliden)pentan]di-zirconium

Tetrachloro-[2,2-bis(η⁵-1H-inden-1-yliden)-6-(η⁵-2-benzylcyclopenta-2,4-dien-1-yliden)-6-(η⁵-4-methoxy-1H-inden-1-yliden)octan]di-zirconium

Tetrachloro-[1-[bis(η⁵-1H-inden-1-yliden)methylstannyl]-7-(⁵-cyclopenta-2,4-dien-1-yliden)-7-(η⁵-9H-fluoren-9-yliden)oct-4-en]di-zirconium

Tetrachloro-[2-[η⁵-2-methyl-4-phenyl-1H-inden-1-yliden)(η⁵-2-methyl-4,6-diisopropyl-1H-inden-1-yliden)ethylstannyl]-5-(η⁵-cyclopenta-2,4-dien-1-yliden)-5-(η⁵-1H-inden-1-yliden)-3-phenyl-4-methoxyheptan]di-zirconium

Tetrachloro-[1-[(η⁵-2,7-dimethoxy-9H-fluoren-9-yliden)(η⁵-1H-inden-1-yliden)propylsilyl]-3-(η⁵-cyclopenta-2,4-dien-1-yliden)-3-(η⁵-9H-fluoren-9-yliden)butan]di-zirconium

Tetrachloro-[1-[bis(η⁵-7-methyl-5-phenyl-1H-inden-1-yliden)-tert-butylsilyl]-3-(h⁵-1H-inden-1-yliden)-3-(η⁵-4-ethyl-9H-fluoren-9-yliden)butan]di-zirconium

Tetrachloro-[2-[(η⁵-cyclopenta-2,4-dien-1-yliden)(h⁵-9H-fluoren-9-yliden)methylsilyl]-5,5-bis(η⁵-2-methyl-4-naphthyl-1H-inden-1-yliden)-5-phenylpentan]di-zirconium

Tetrachloro-[1-[bis(η⁵-1H-inden-1-yliden)methylsilyl]-6-(h⁵-cyclopenta-2,4-dien-1-yliden)-6-(η⁵-9H-fluoren-9-yliden)-3-oxaheptan]di-zirconium
Tetrachloro-[1-[bis($\eta^5$-2-methyl-1H-inden-1-yliden)methoxysilyl]-6-($\eta^5$-2,3,4,5-tetramethylcyclopenta-2,4-dien-1-yliden)-6-($\eta^5$-9H-fluoren-9-yliden)-3-oxaheptan]-di-zirconium
Tetrachloro-[1-[bis($\eta^5$-2-methyl-4-phenyl-1H-inden-1-yliden)phenylgermyl]-6-($\eta^5$-cyclopenta-2,4-dien-1-yliden)-6-($\eta^5$-9H-fluoren-9-yliden)-3-oxaheptan]di-zirconium
Tetrachloro-[1-[bis($\eta^5$-4-chloro-2-methyl-1H-inden-1-yliden)ethylsilyl]-7,8-bis(h$^5$-2,7-di-tert-butyl-9H-fluoren-9-yliden)-3-oxanonan]di-zirconium
Tetrachloro-[2,2-bis($\eta^5$-1H-inden-1-yliden)-6-($\eta^5$-2-benzylcyclopenta-2,4-dien-1-yliden)-6-($\eta^5$-4-methoxy-1H-inden-1-yliden)-4-oxaoctan]di-zirconium
Tetrachloro-[1-[bis($\eta^5$-1H-inden-1-yliden)methylstannyl]-9-($\eta^5$-cyclopenta-2,4-dien-1-yliden)-9-($\eta^5$-9H-fluoren-9-yliden)-5-oxadecan]di-zirconium
Tetrachloro-[1-[($\eta^5$-2-methyl-4-phenyl-1H-inden-1-yliden)($\eta^5$-2-methyl-4,6-diisopropyl-1H-inden-1-yliden)ethylstannyl]-7-($\eta^5$-cyclopenta-2,4-dien-1-yliden)-7-($\eta^5$-1H-inden-1-yliden)-3-oxaheptan]di-zirconium
Tetrachloro-[1-[($\eta^5$-2,7-dimethoxy-9H-fluoren-9-yliden)($\eta^5$-1H-inden-1-yliden)propylsilyl]-8-($\eta^5$-cyclopenta-2,4-dien-1-yliden)-9-($\eta^5$-9H-fluoren-9-yliden)-4-oxanonan]di-zirconium
Tetrachloro-[1-[bis($\eta^5$-7-methyl-5-phenyl-1H-inden-1-yliden)-tert-butylsilyl]-5-($\eta^5$-1H-inden-1-yliden)-5-($\eta^5$-4-ethyl-9H-fluoren-9-yliden)-2-oxapentan]di-zirconium
Tetrachloro-[1-[($\eta^5$-cyclopenta-2,4-dien-1-yliden)($\eta^5$-9H-fluoren-9-yliden)methylsilyl]-6,6-bis($\eta^5$-2-methyl-4-naphthyl-1H-inden-1-yliden)-3-oxaheptan]di-zirconium
Tetrachloro-[1-[bis($\eta^5$-2-methyl-4,5-benzo-1H-inden-1-yliden)methylsilyl]-8-($\eta^5$-cyclopenta-2,4-dien-1-yliden)-8-($\eta^5$-9H-fluoren-9-yliden)4-isopinocamphyl-4-bora-nonan]di-zirconium
Tetrachloro-[1-[bis($\eta^5$-1H-inden-1-yliden)methylsilyl]-7-($\eta^5$-cyclopenta-2,4-dien-1-yliden)-7-($\eta^5$-9H-fluoren-9-yliden)-3-oxa-4-sila-octan]di-zirconium Tetrachloro-[1-[bis($\eta^5$-2-methyl-1H-inden-1-yliden)methoxysilyl]-7-($\eta^5$-2,3,4,5-tetramethylcyclopenta-2,4-dien-1-yliden)-7-($\eta^5$-9H-fluoren-9-yliden)3-oxa-4-sila-octan]di-zirconium
Tetrachloro-[1-[bis($\eta^5$-2-methyl-4-phenyl-1H-inden-1-yliden)phenylgermyl]-7-($\eta^5$-cyclopenta-2,4-dien-1-yliden)-7-($^5$-9H-fluoren-9-yliden)-3-oxa-4-sila-octan]di-zirconium
Tetrachloro-[1-[bis($\eta^5$-4-chloro-2-methyl-1H-inden-1-yliden)ethylsilyl]-8,9-bis ($\eta^5$ 2,7-di-tert-butyl-9H-fluoren-9-yliden)-4-oxa-3-sila-decan]di-zirconium
Tetrachloro-[2,2-bis($\eta^5$-1H-inden-1-yliden)-7-($\eta^5$-2-benzylcyclopenta-2,4-dien-1-yliden)-7-($\eta^5$-4-methoxy-1H-inden-1-yliden)-5-oxa-4-sila-nonan]di-zirconium
Tetrachloro-[1-[bis($\eta^5$-1H-inden-1-yliden)methylstannyl]-9-($\eta^5$-cyclopenta-2,4-dien-1-yliden)-9-($\eta^5$-9H-fluoren-9-yliden)-5-oxa-4-sila-decan]di-zirconium
Tetrachloro-[1-[($\eta^5$-2-methyl-4-phenyl-1H-inden-1-yliden)($\eta^5$-2-methyl-4,6-diisopropyl-1H-inden-1-yliden)ethylstannyl]-7-($\eta^5$-cyclopenta-2,4-dien-1-yliden)-7-($\eta^5$-1H-inden-1-yliden)-3-oxa-4-sila-heptan]di-zirconium
Tetrachloro-[1-[($\eta^5$-2,7-dimethoxy-9H-fluoren-9-yliden)($\eta^5$-1H-inden-1-yliden)propylsilyl]-8-($\eta^5$-cyclopenta-2,4-dien-1-yliden)-9-($\eta^5$-9H-fluoren-9-yliden)-4-oxa-5-sila-nonan]di-zirconium
Tetrachloro-[1-[bis($\eta^5$-7-methyl-5-phenyl-1H-inden-1-yliden)-tert-butylsilyl]-5-($\eta^5$-1H-inden-1-yliden)-5-($\eta^5$-4-ethyl-9H-fluoren-9-yliden)-2-oxa-3-sila-pentan]di-zirconium
Tetrachloro-[1-[($\eta^5$-cyclopenta-2,4-dien-1-yliden)($\eta^5$-9H-fluoren-9-yliden)methylsilyl]-7,7-bis($\eta^5$-2-methyl-4-naphthyl-1H-inden-1-yliden)-3-oxa-4-sila-octan]di-zirconium
Tetrachloro-[1-[bis($\eta^5$-1H-inden-1-yliden)methylsilyl]-8-($\eta^5$-cyclopenta-2,4-dien-1-yliden)-8-($\eta^5$-9H-fluoren-9-yliden)-4,4-dimethyl-3,5-dioxa-4-sila-nonan]di-zirconium
Tetrachloro-[1-[bis($\eta^5$-2-methyl-1H-inden-1-yliden)methoxysilyl]-7-($\eta^5$-2,3,4,5-tetramethylcyclopenta-2,4-dien-1-yliden)-7-($\eta^5$-9H-fluoren-9-yliden)-3,5-dioxa-4-sila-octan]di-zirconium
Tetrachloro-[1-[bis($\eta^5$-2-methyl-4-phenyl-1H-inden-1-yliden)phenylgermyl]-8-($\eta^5$-cyclopenta-2,4-dien-1-yliden)-8-($\eta^5$-9H-fluoren-9-yliden)-3,5-dioxa-4-sila-nonan]di-zirconium
Tetrachloro-[1-[bis($\eta^5$-4-chloro-2-methyl-1H-inden-1-yliden)ethylsilyl]-8,9-bis ($\eta^5$-2,7-di-tert-butyl-9H-fluoren-9-yliden)-4,6-dioxa-5-sila-decan]di-zirconium
Tetrachloro-[2,2-bis($\eta^5$-1H-inden-1-yliden)-10-($\eta^5$-2-benzylcyclopenta-2,4-dien-1-yliden)-10-($\eta^5$-4-methoxy-1H-inden-1-yliden)-5,7-dioxa-6-sila-undecan]di-zirconium
Tetrachloro-[1-[bis($\eta^5$-1H-inden-1-yliden)methylstannyl]-9-($\eta^5$-cyclopenta-2,4-dien-1-yliden)-9-($\eta^5$-9H-fluoren-9-yliden)-3,5-dioxa-4-sila-decan]di-zirconium
Tetrachloro-[1-[($\eta^5$-2-methyl-4-phenyl-1H-inden-1-yliden)($\eta^5$-2-methyl-4,6-diisopropyl-1H-inden-1-yliden)ethylstannyl]-7-($\eta^5$-cyclopenta-2,4-dien-1-yliden)-7-($\eta^5$-1H-inden-1-yliden)-4,6-dioxa-5-sila-dodecan]di-zirconium
Tetrachloro-[1-[($\eta^5$-2,7-dimethoxy-9H-fluoren-9-yliden)($\eta^5$-1H-inden-1-yliden)propylsilyl]-8-($\eta^5$-cyclopenta-2,4-dien-1-yliden)-9-($\eta^5$-9H-fluoren-9-yliden)-3,5-dioxa-4-sila-nonan]di-zirconium
Tetrachloro-[1-[bis($\eta^5$-7-methyl-5-phenyl-1H-inden-1-yliden)-tert-butylsilyl]-5-($\eta^5$-1H-inden-1-yliden)-5-($\eta^5$-4-ethyl-9H-fluoren-9-yliden)-2,4-dioxa-3-silapentan]di-zirconium
Tetrachloro-[1-[($\eta^5$-cyclopenta-2,4-dien-1-yliden)(h$^5$-9H-fluoren-9-yliden)methylsilyl]-9,9-bis($\eta^5$-2-methyl-4-naphthyl-1H-inden-1-yliden)-3,5-dioxa-4-siladecan]di-zirconium
Tetrachloro-[4-($\eta^5$-cyclopenta-2,4-dien-1-yliden)-4-($\eta^5$-9H-fluoren-9-yliden)-1,1-bis($\eta^5$-1H-inden-1-yliden)silacyclohexan]di-zirconium
Tetrachloro-[1,1-bis($\eta^5$-2-methyl-1H-inden-1-yliden)-4-($\eta^5$-2,3,4,5-tetramethylcyclopenta-2,4-dien-1-yliden)-4-($\eta^5$-9H-fluoren-9-yliden)silacycloheptan]di-zirconium
Tetrachloro-[1,1-bis($\eta^5$-2-methyl-4-phenyl-1H-inden-1-yliden)-4-($\eta^5$-cyclopenta-2,4-dien-1-yliden)-4-($\eta^5$-9H-fluoren-9-yliden)silacyclohexan]di-zirconium
Tetrachloro-[7,7-bis($\eta^5$-4-chloro-2-methyl-1H-inden-1-yliden)-1,2-bis($\eta^5$-2,7-di-tert-butyl-9H-fluoren-9-yliden)silacyclonon-4-en]di-zirconium
Tetrachloro-[1,1-bis($\eta^5$-1H-inden-1-yliden)-5-($\eta^5$-2-benzylcyclopenta-2,4-dien-1-yliden)-5-($\eta^5$-4-methoxy-1H-inden-1-yliden)silacyclohexan]di-zirconium
Tetrachloro-[1,1-bis($\eta^5$-1H-inden-1-yliden)-7-($\eta^5$-cyclopenta-2,4-dien-1-yliden)-7-($\eta^5$-9H-fluoren-9-yliden)silacyclohexan]di-zirconium
Tetrachloro-[1-($\eta^5$-2-methyl-4-phenyl-1H-inden-1-yliden)-2-($\eta^5$-2-methyl-4,6-diisopropyl-1H-inden-1-yliden)-6-($\eta^5$-cyclopenta-2,4-dien-1-yliden)-6-($\eta^5$-1H-inden-1-yliden)-4-phenyl-7-methoxy1-silacyclodeca-4,8-dien]di-zirconium
Tetrachloro-[1-($\eta^5$-2,7-dimethoxy-9H-fluoren-9-yliden)-2-($\eta^5$-1H-inden-1-yiden)-4-($\eta^5$-cyclopenta-2,4-dien-1-yliden)-5-($\eta^5$-9H-fluoren-9-yliden)cyclo- hexan]di-zirconium
Tetrachloro-[1,1-bis($\eta^5$-7-methyl-5-phenyl-1H-inden-1-yliden)-3-($\eta^5$-1H-inden-1-yliden)-3-($\eta^5$-4-ethyl-H-fluoren-9-yliden)-5-oxacycloheptan]di-zirconium
Tetrachloro-[2-($\eta^5$-cyclopenta-2,4-dien-1-yliden)-2-($\eta^5$-9H-fluoren-9-yliden)-5,5-bis($\eta^5$-2-methyl-4-naphthyl-1H-inden-1-yliden)-3,4-diethylcyclooctan]di-zirconium
Tetrachloro-[1-[1,2-bis($\eta^5$-1H-inden-1-yliden)-1,2,2-trimethyldisilan-1-yl]-3-($\eta^5$-cyclopenta-2,4-dien-1-yliden)-4-($\eta^5$-9H-fluoren-9-yliden)-3,4-dimethylpentan]di-zirconium
Tetrachloro-[1-[1,2-bis($\eta^5$-2-methyl-1H-inden-1-yliden)-1,2,2-triethyldisilan-1-yl]-6-($\eta^5$-2,3,4,5-tetramethylcyclopenta-2,4-dien-1-yliden)-7-($\eta^5$-9H-fluoren-9-yliden)-6,7-dimethyloctan]di-zirconium
Tetrachloro-[1-[1,2-bis($\eta^5$-2-methyl-4-phenyl-1H-inden-1-yliden)-1,2,2-triphenyl-di-german-1-yl]-3-($\eta^5$-cyclopenta-2,4-dien-1-yliden)-4-($\eta^5$-9H-fluoren-9-yliden)-3-methyl-4-phenylpentan]di-zirconium
Tetrachloro-[1-[1,2-bis($\eta^5$-2,7-di-tert-butyl-9H-fluoren-9-yliden)-1,2,2-trimethyl-di-silan-1-yl]-3,4-bis($\eta^5$-4-chloro-2-methyl-1H-inden-1-yliden)-3,4-dimethylpentan]di-zirconium
Tetrachloro-[1-[1-($\eta^5$-1H-inden-1-yliden)-2-($\eta^5$-2-benzylcyclopenta-2,4-dien-1-yliden)-1,2,2-trimethyldisilan-1-yl]-3-($\eta^5$-2-benzylcyclopenta-2,4-dien-1-yliden)-4-($h^5$-4-methoxy-1H-inden-1-yliden)-4,5-di-methylhexan]di-zirconium
Tetrachloro-[2,3-bis($\eta^5$-1H-inden-1-yliden)]-8-($\eta^5$-cyclopenta-2,4-dien-1-yliden)-9-($\eta^5$-9H-fluoren-9-yliden)-3,5,8-trimethyl-3-sila-decan]di-zirconium
Tetrachloro-[2-($\eta^5$-2-methyl-4-phenyl-1H-inden-1-yliden)]-3-($\eta^5$-2-methyl-4,6-diisopropyl-1H-inden-1-yliden)-8-($\eta^5$-cyclopenta-2,4-dien-1-yliden)-9-($\eta^5$-1H-inden-1-yliden)-3,5,8-triphenyl-3-stanna-decan]di-zirconium
Octachloro-[2,10-bis[bis($\eta^5$-1H-inden-1-yliden)methylsilyl]-6,14-bis[1-($\eta^5$-7-methyl-5-phenyl-1H-inden-1-yliden)-1-($\eta^5$-9H-fluoren-9-yliden)ethyl]pentadecan]tetra-zirconium
Octachloro-[2-[bis($\eta^5$-2-methyl-4-naphthyl-1H-inden-1-yliden)methylsilyl]-10-[bis-($\eta^5$-cyclopenta-2,4-dien-1-yliden)methylsilyl]-6,14-bis[1-($\eta^5$-cyclo-penta-2,4-dien-1-yliden)-1-($\eta^5$-9H-fluoren-9-yliden)ethyl]pentadecan]tetra-zirconium
Octachloro-[3-[bis($\eta^5$-2-methyl-4-naphthyl-1H-inden-1-yliden)methylsilyl]-7-[bis-($\eta^5$-cyclopenta-2,4-dien-1-yliden)methylsilyl]-15-[1-($\eta^5$-cyclo-penta-2,4-dien-1-yliden)-1-($\eta^5$-9H-fluoren-9-yliden)ethyl]octadecan]tetra-zirconium
Octachloro-[3-[bis($\eta^5$-2-methyl-4-naphthyl-1H-inden-1-yliden)methylsilyl]-7-[bis-($\eta^5$-cyclopenta-2,4-dien-1-yliden)methylsilyl]-15-[1-($\eta^5$-cyclo-penta-2,4-dien-1-yliden)-1-($\eta^5$-9H-fluoren-9-yliden)ethyl]-5-12-dimethyl-8-phenoxy-16-(1-naphthyl)octadecan]tetra-zirconium
Octachloro-[2-[bis($\eta^5$-2-methyl-4-naphthyl-1H-inden-1-yliden)methylsilyl]-7-[bis-($\eta^5$-cyclopenta-2,4-dien-1-yliden)methylsilyl]-8-[bis($\eta^5$-2-methyl-4-phenyl-1H-inden-1-yliden)phenylgermyl]-15-[1-($\eta^5$-cyclo-penta-2,4-dien-1-yliden) -1-($\eta^5$-9H-fluoren-9-yliden)ethyl]-16-[bis($\eta^5$-2-methyl-4,6-diisopropyl-1H-inden-1-yliden)-methoxysilyl]octadecan]tetra-zirconium
Octachloro-[2,2,8,8-tetrakis($\eta^5$-1H-inden-1-yliden)-5,11-bis($\eta^5$-cyclopenta-2,4-dien-1-yliden)-5,11-bis($\eta^5$-9H-fluoren-9-yliden)-2,8-disiladodecan]tetra-zirconium Octachloro-[2,3,8,8-tetrakis($\eta^5$-1H-inden-1-yliden)-5,11-bis($\eta^5$-cyclopenta-2,4-dien-1-yliden)-5,12-bis($\eta^5$-9H-fluoren-9-yliden)-2,8-disilatetradecan]tetra-zirconium
Octachloro-[2,9-bis($\eta^5$-2-methyl-1H-inden-1-yliden)-2,9-bis($\eta^5$-9H-fluoren-9-yliden)-5,11-bis($\eta^5$-cyclopenta-2,4-dien-1-yliden)-5,11-bis($\eta^5$-2,3,4,5-tetramethyl-cyclopenta-2,4-dien-1-yliden)-2,9-disiladodecan]tetra-zirconium

Die erfindungsgemäßen Metallocene lassen sich auf verschiedenen Wegen synthetisieren. Beispiele dafür sind: Das Ligandsystem wird aus leicht zugänglichen Vorstufen über mehrere Stufen synthetisiert. Das Ligandsystem wird mit einer Base, z. B. Butyllithium, zum Polylithiumsalz und anschließend mit einem Metallhalogenid, z. B. Zirkoniumtetrachlorid zum mehrkernigen Metallocen umgesetzt.

Die Synthese von Ligandsystemen mit mehr als zwei Metallocenfragmenten L-$MX_2$-L wird schematisch anhand mehrerer allgemeiner Beispiele gezeigt. Für die Kürzel gelten dieselben Definitionen wie bei der Beschreibung der Erfindung.

Diese Beispiele dienen der Illustration und sollen keineswegs den Umfang der Erfindung einschränken.

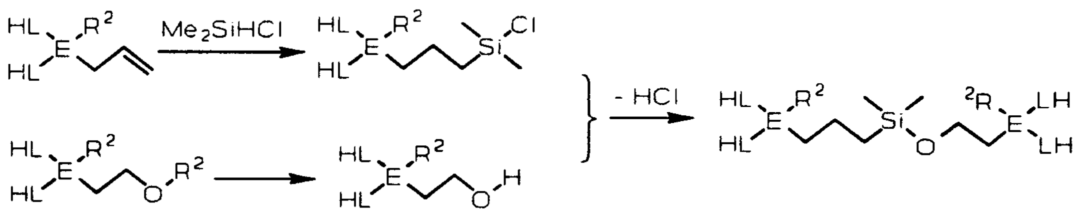


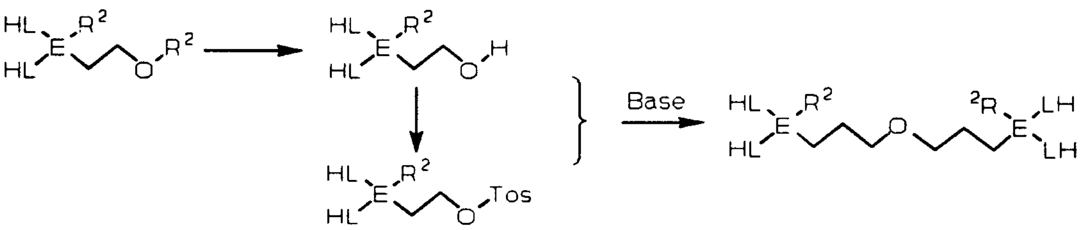


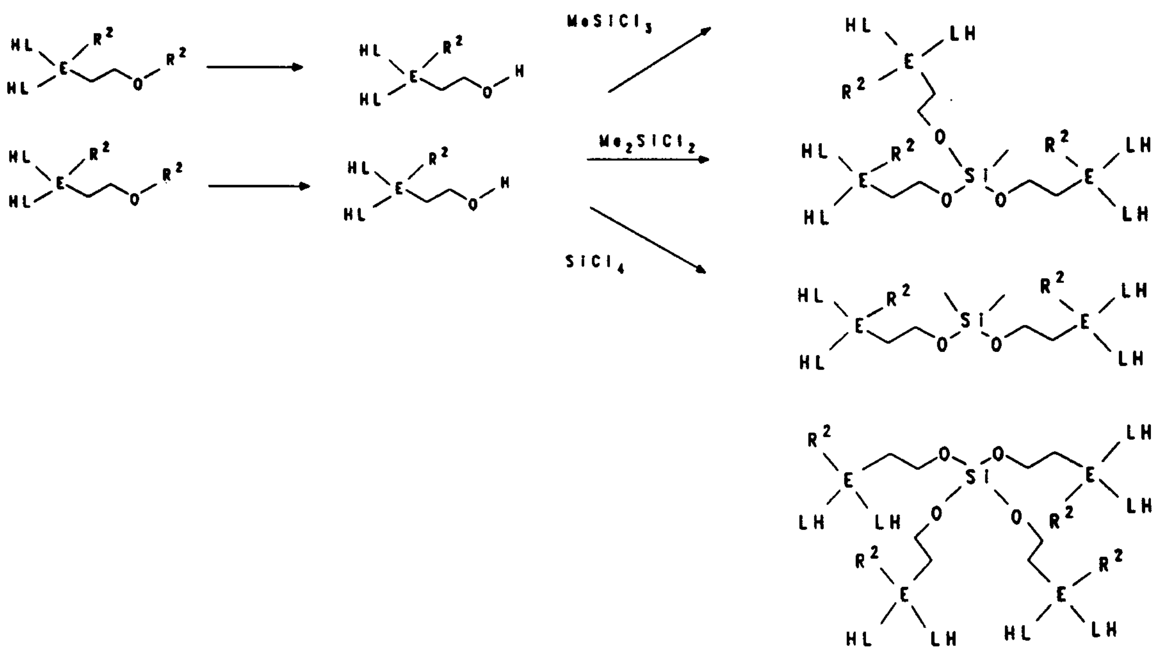


Die Umsetzung dieser Ligandsysteme zu den erfindungsgemäßen Metallocenen verdeutlicht das nachfolgende Reaktionsschema:

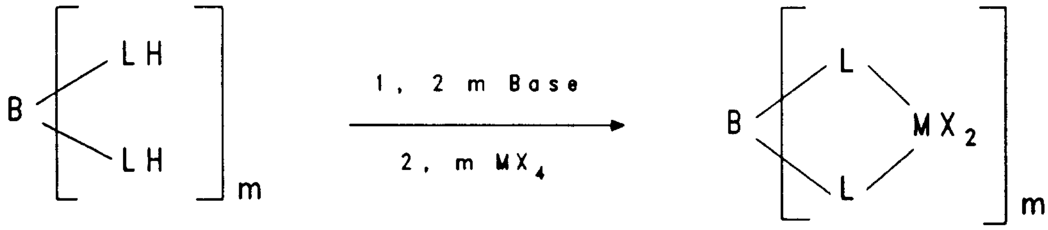


Außerdem ist die Synthese funktionalisierter mehrkerniger Metallocenkomplexe mit polymerisationsfähigen Seitengruppen oder mit Seitengruppen möglich, die eine selektive oder unselektive chemische Verknüpfung zu höhermolekularen Metallocenen ermöglicht. Das Produkt kann dabei aus einem Gemisch unterschiedlicher mehrkerniger Metallocene bestehen, wobei das Verhältnis der unterschiedlichen Metallocenfragmente durch die Stöchiometrie der Edukte vor der Kupplungsreaktion gegeben ist.

Die allgemeinen Reaktionsschemata dienen lediglich beispielhaft der Illustration und sollen keineswegs den Umfang der Erfindung einschränken. Dabei sind x und y ganze Zahlen von 1 bis 100.000.

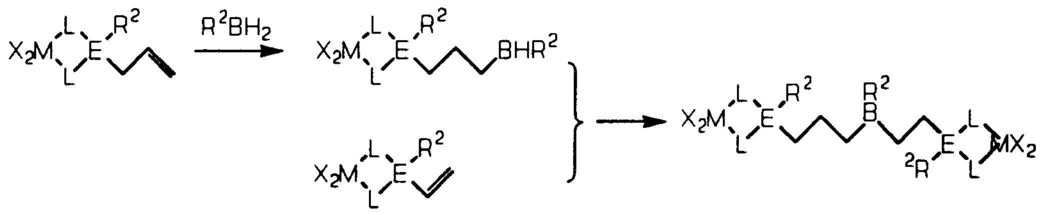


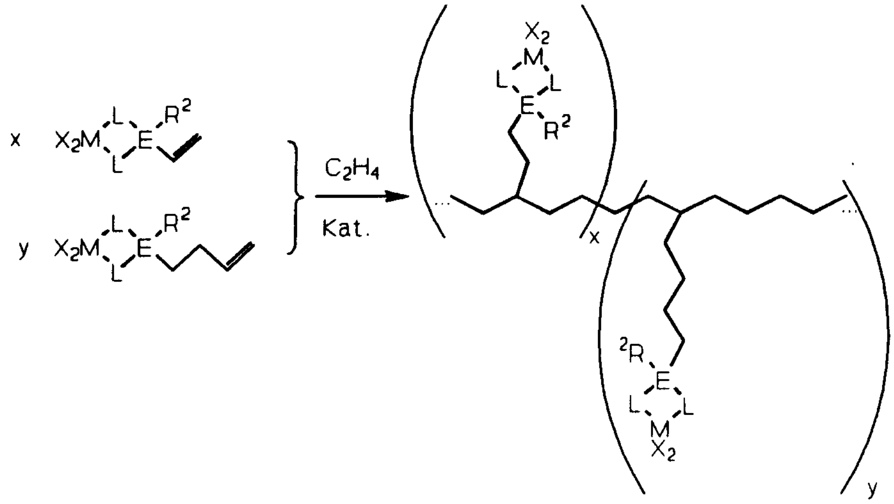


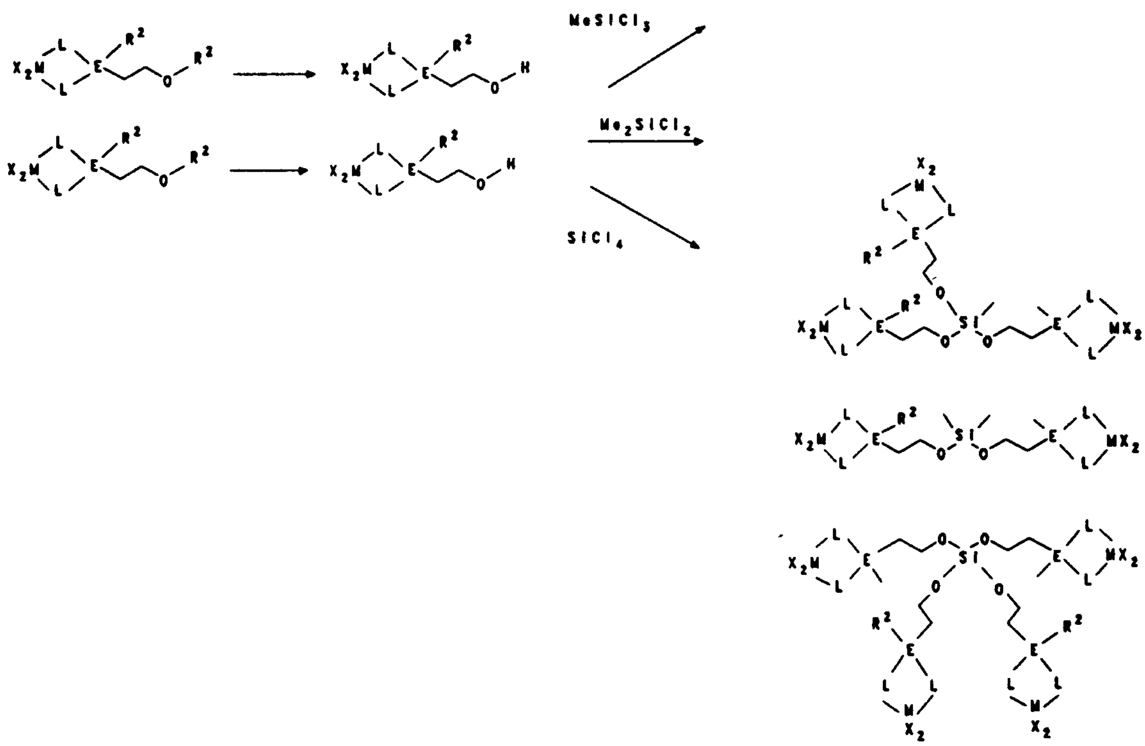


Die vorliegende Erfindung betrifft auch ein Verfahren zur Herstellung eines Olefinpolymers durch Polymerisation mindestens eines Olefins in Gegenwart eines Katalysators, welcher mindestens eine Metallocenverbindung und einen Cokatalysator enthält, dadurch gekennzeichnet, daß das Metallocen eine Verbindung der Formel I ist. Die Polymerisation kann eine Homopolymerisation oder eine Copolymerisation sein.

Bevorzugt werden Olefine der Formel $R^a$-CH = CH-$R^b$ homo- oder copolymerisiert, worin $R^a$ und $R^b$ gleich oder verschieden sind und ein Wasserstoffatom oder einen Kohlenwasserstoffrest mit 1 bis 20 Kohlenstoffatomen, insbesondere 1 bis 10 Kohlenstoffatome, bedeuten, oder $R^a$ und $R^b$ zusammen mit den sie verbindenden Atomen einen oder mehrere Ringe bilden. Beispiele für solche Olefine sind 1-Olefine wie Ethylen, Propylen, 1-Buten, 1-Penten, 1-Hexen, 4-Methyl-1-penten oder 1-Octen, Styrol, Diene wie 1,3-Butadien oder 1,4-Hexadien und cyclische Olefine wie Norbornen, Tetracyclododecen, Norbornadien oder Vinylnorbornen. Bevorzugt wird in dem erfindungsgemäßen Verfahren Ethylen homopolymerisiert, oder Ethylen mit einem oder mehrereren 1-Olefinen mit 3 bis 20 Kohlenstoffatomen, wie Propylen, und/oder einem oder mehreren Dienen mit 4 bis 20 Kohlenstoffatomen, wie 1,4-Butadien, copolymerisiert. Beispiele solcher Copolymere sind Ethylen/Propylen-Copolymere und Ethylen/Propylen/1,4-Hexadien-Copolymere.

Die Polymerisation wird bevorzugt bei einer Temperatur von -60 bis 250 °C, besonders bevorzugt 50 bis 200 °C, durchgeführt. Der Druck beträgt bevorzugt 0.5 bis 64 bar.

Die Polymerisation kann in Lösung, in Masse, in Suspension oder in der Gasphase, kontinuierlich oder diskontinuierlich, ein- oder mehrstufig durchgeführt werden. Eine bevorzugte Ausführungsform ist die Gasphasenpolymerisation.

Bevorzugt enthält der in dem erfindungsgemäßgen Verfahren eingesetzte Katalysator eine Metallocenverbindung der Formel I.

Prinzipiell ist als Cokatalysator in dem erfindungsgemäßen Verfahren jede Verbindung geeignet, die aufgrund ihrer Lewis-Acidität das neutrale Metallocen in ein Kation überführen und dieses stabilisieren kann ("labile Koordination"). Darüber hinaus soll der Cokatalysator oder das aus ihm gebildete Anion keine weiteren Reaktionen mit dem gebildeten Metallocenkation eingehen (EP 427 697). Als Cokatalysator wird bevorzugt eine Aluminiumverbindung bzw. Mischungen mehrerer Aluminiumverbindungen und/oder eine Borverbindung bzw. Mischungen meherer Borverbindungen verwendet.

Die Borverbindung hat bevorzugt die Formel $R^4_xNH_{4-x}BR^5_4$, $R^4_xPH_{4-x}BR^5_4$, $R^4_3CBR^4_5$ oder $BR^5_3$, worin x eine Zahl von 1 bis 4, bevorzugt 3, bedeutet, die Reste $R^4$ gleich oder verschieden, bevorzugt gleich sind, und $C_1$-$C_{10}$-Alkyl- oder $C_6$-$C_{18}$- Arylreste sind, oder zwei Reste $R^4$ zusammen mit den sie verbindenden Atomen einen Ring bilden, und die Reste $R^5$ gleich oder verschieden, bevorzugt gleich sind, und $C_6$-$C_{18}$-Aryl sind, das durch Alkyl, Haloalkyl oder Fluor substituiert sein kann. Insbesondere steht $R^4$ für Ethyl, Propyl, Butyl oder Phenyl und $R^5$ für Phenyl, Pentafluorophenyl, 3,5-Bistrifluoromethylphenyl, Mesityl, Xylyl oder Tolyl (EP 277 003, EP 277 004 und EP 426 638).

Bevorzugt wird als Cokatalysator eine Aluminiumverbindung wie Aluminoxan und/oder ein Aluminiumalkyl eingesetzt.

Besonders bevorzugt wird als Cokatalysator ein Aluminoxan, insbesondere der Formel IIa für den linearen Typ und/oder der Formel IIb für den cyclischen Typ verwendet,

IIa

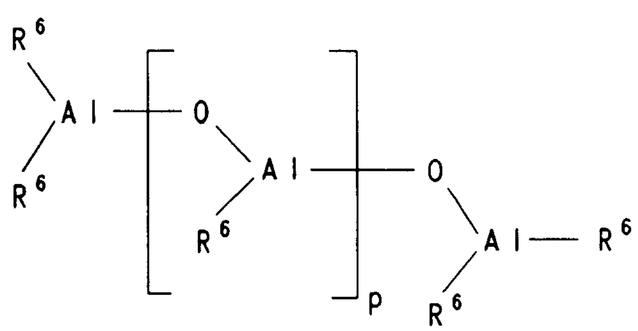

IIb

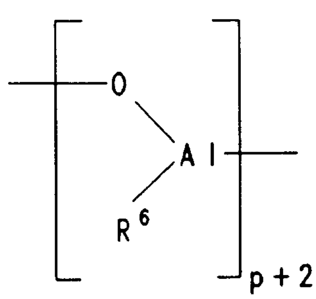

wobei in den Formeln Va und Vb die Reste $R^6$ gleich oder verschieden sind und Wasserstoff oder eine $C_1$-$C_{18}$-Alkylgruppe oder eine $C_6$-$C_{18}$-Arylgruppe oder Benzyl bedeuten, und p eine ganze Zahl von 2 bis 50, bevorzugt 10 bis 35 bedeutet.

Bevorzugt sind die Reste $R^6$ gleich und bedeuten Wasserstoff, Methyl, Isobutyl, Phenyl oder Benzyl, besonders bevorzugt Methyl.

Die Verfahren zur Herstellung der Aluminoxane sind bekannt (DE 4 004 477).

Die genaue räumliche Struktur der Aluminoxane ist nicht bekannt (J. Am. Chem. Soc, 115 (1993) 4971). Beispielsweise ist denkbar, daß sich Ketten und Ringe zu größeren zwei- oder dreidimensionalen Strukturen verbinden.

Unabhängig von der Art der Herstellung ist allen Aluminoxanlösungen ein wechselnder Gehalt an nicht umgesetzter Aluminiumausgangsverbindung, die in freier Form oder als Addukt vorliegt, gemeinsam.

Es ist möglich, die erfindungsgemäße Metallocenverbindung vor dem Einsatz in der Polymerisation mit einem Cokatalysator, insbesondere einem Aluminoxan vorzuaktivieren. Dadurch wird die Polymerisationsaktivität deutlich erhöht. Die Voraktivierung der Metallocenverbindung wird vorzugsweise in Lösung vorgenommen. Bevorzugt wird dabei die Metallocenverbindung in einer Lösung des Aluminoxans in einem inerten Kohlenwasserstoff aufgelöst. Als

inerter Kohlenwasserstoff eignet sich ein aliphatischer oder aromatischer Kohlenwasserstoff. Bevorzugt wird Toluol verwendet.

Die Konzentration des Aluminoxans in der Lösung liegt im Bereich von ca. 1 Gew.-% bis zur Sättigungsgrenze, vorzugsweise von 5 bis 30 Gew.-%, jeweils bezogen auf die Gesamtlösungsmenge. Das Metallocen kann in der gleichen Konzentration eingesetzt werden, vorzugsweise wird es jedoch in einer Menge von $10^{-4}$ bis 1 mol pro mol Aluminium eingesetzt. Die Voraktivierungsdauer beträgt 5 Minuten bis 60 Stunden, vorzugsweise 5 bis 60 Minuten. Man arbeitet bei einer Temperatur von -78 bis 100 °C, vorzugsweise von 0 bis 70 °C.

Dabei wird die Metallocenverbindung bevorzugt in einer Konzentration, bezogen auf das Übergangsmetall, von $10^{-3}$ bis $10^{-8}$, vorzugsweise $10^{-4}$ bis $10^{-7}$ mol Übergangsmetall pro $dm^3$ Lösungsmittel bzw. pro $dm^3$ Reaktorvolumen angewendet. Das Aluminoxan wird bevorzugt in einer Konzentration von $10^{-6}$ bis $10^{-1}$ mol, vorzugsweise $10^{-5}$ bis $10^{-2}$ mol pro $dm^3$ Lösungsmittel bzw. pro $dm^3$ Reaktorvolumen verwendet. Die anderen genannten Cokatalysatoren und/oder Scavenger werden in etwa äquimolaren Mengen zu der Metallocenverbindung verwendet. Prinzipiell sind aber auch höhere Konzentrationen möglich.

Zur Entfernung von im Olefin vorhandenen Katalysatorgiften ist eine Reinigung mit einer Aluminiumverbindung, bevorzugt einem Aluminiumalkyl, wie Trimethylaluminium, Triisobutylaluminium oder Triethylaluminium, vorteilhaft (Scavenger-Funktion). Diese Reinigung kann sowohl im Polymerisationssystem selbst erfolgen, oder das Olefin wird vor der Zugabe in das Polymerisationssystem mit der Aluminiumverbindung in Kontakt gebracht und anschließend wieder abgetrennt.

Als Molmassenregler und/oder zur Steigerung der Aktivität kann in dem erfindungsgemäßen Verfahren Wasserstoff zugegeben werden. Hierdurch können niedermolekulare Polyolefine wie Wachse erhalten werden.

Bevorzugt wird in dem erfindungsgemäßen Verfahren die Metallocenverbindung mit einem oder mehreren Cokatalysatoren außerhalb des Polymerisationsreaktors in einem separaten Schritt unter Verwendung eines geeigneten Lösungsmittels umgesetzt. Dabei kann eine Trägerung vorgenommen werden. Der geträgerte Katalysator kann in dem Reaktionsmedium in Gegenwart eines Scavengers, z. B. einem Aluminiumalkyl wie Triethylaluminium, Triisobutylaluminium usw. eingesetzt werden.

In dem erfindungsgemäßen Verfahren kann mit Hilfe der Metallocenverbindung eine Vorpolymerisation erfolgen. Zur Vorpolymerisation wird bevorzugt das (oder eines der) in der Polymerisation eingesetzte(n) Olefin(e) verwendet.

Der in dem erfindungsgemäßen Verfahren eingesetzte Katalysator kann geträgert sein. Durch die Trägerung läßt sich beispielsweise die Kornmorphologie des hergestellten Polyolefins steuern. Dabei kann die Metallocenverbindung zunächst mit dem Träger und anschließend mit dem Cokatalysator umgesetzt werden. Es kann auch zunächst der Cokatalysator geträgert werden und anschließend mit der Metallocenverbindung umgesetzt werden. Auch ist es möglich, das Reaktionsprodukt von Metallocenverbundung und Cokatalysator zu trägern. Geeignete Trägermaterialien sind beispielsweise Silikagele, Aluminiumoxide, festes Aluminoxan oder andere anorganische Trägermaterialien wie beispielsweise Magnesiumchlorid. Ein geeignetes Trägermaterial ist auch ein Polyolefinpulver in feinverteilter Form. Die Herstellung des geträgerten Cokatalysators kann beispielsweise wie in EP 567 952 beschrieben durchgeführt werden.

Wenn die Polymerisation als Suspensions- oder Lösungspolymerisation durchgeführt wird, wird ein für das Ziegler-Niederdruckverfahren gebräuchliches inertes Lösungsmittel verwendet. Beispielsweise arbeitet man in einem aliphatischen oder cycloaliphatischen Kohlenwasserstoff; als solcher sei beispielsweise Propan, Butan, Hexan, Heptan, Isooctan, Cyclohexan, Methylcyclohexan, genannt. Weiterhin kann eine Benzin- bzw. hydrierte Dieselölfraktion benutzt werden. Brauchbar ist auch Toluol. Bevorzugt wird im flüssigen Monomeren polymerisiert.

Werden inerte Lösungsmittel verwendet, werden die Monomeren gasförmig oder flüssig zudosiert.

Die Dauer der Polymerisation ist beliebig, da das in dem erfindungsgemäßen Verfahren zu verwendende Katalysatorsystem einen nur geringen zeitabhängigen Abfall der Polymerisationsaktivität zeigt.

Die nach dem erfindungsgemäßen Verfahren hergestellten Polymerprodukte sind insbesondere zur Herstellung von Formkörpern wie Folien, Platten, Fasern oder Großhohlkörpern (z. B. Rohre) geeignet.

Die erfindungsgemäße Metallocenverbindung erlaubt die Herstellung von Polymermischungen, die in gewünschter, vom Trägerungsverfahren unabhängiger Zusammensetzung, in allen Polymerkörnern gleichmäßig gebildet werden.

Insbesondere werden Polymermischungen zugänglich, die von den Trägerungsverfahren unabhängig definierte Zusammensetzungen aufweisen und in einheitlich gemischter Form (optimale Durchmischung) im Polymerisationskorn vorliegen.

Die mit den erfindungsgemäßen Metallocenen hergestellten Polyolefinmischungen enthalten Polymerkomponenten, die sich in verschiedenen Merkmalen unterscheiden können, z.B. Molekulargewicht, Molekulargewichtsverteilung, Taktizität (z. B. isotaktisch, syndiotaktisch, hemiisotaktisch, ataktisch), Grad der Taktizität (z. B. Syndiotaxieindex, Isotaxieindex), Comonomergehalt (z. B. hoher Ethylen-Einbau, niedriger Ethylen-Einbau), Art des Comonomereinbaus (z. B. statistisch, Blockbildung).

Beispiele:

Herstellung und Handhabung organometallischer Verbindungen erfolgten unter Ausschluß von Luft und Feuchtigkeit unter Argon-Schutzgas (Schlenk-Technik). Alle benötigten Lösungsmittel wurden vor Gebrauch durch mehrstündiges Sieden über geeigneten Trockenmitteln und anschließende Destillation unter Argon absolutiert.

Toluol lösliches Methylaluminoxan wird als 10 %ige Toluol-Lösung von der Fa. WITCO bezogen und enthält gemäß Aluminium-Bestimmung 36 mg Al/ml.

1. Tetrachloro-[1-[bis($\eta^5$-2-methyl-4,5-benzo-1H-inden-1-yliden)methylsilyl]-8-($\eta^5$-cyclopenta-2,4-dien-1-yliden)-8-($\eta^5$-9H-fluoren-9-yliden)-4-isopinocamphyl-4-boranonan]di-zirconium

Eine Lösung von 2.0 g (4.4 mmol) Dichloro-[4-($\eta^5$-cyclopenta-2,4-dien-1-yliden)-4-($\eta^5$-9H-fluoren-9-yliden)-1-penten]zirconium in 100 ml Toluol wird bei -30 °C zu einer THF-Lösung von Isopinocamphylboran (4.4 mmol; hergestellt aus a-Pinen und Boran) getropft. Die Lösung wird anschließend auf 0 °C erwärmt und man läßt bei dieser Temperatur noch 12 h nachrühren. Zu dieser Lösung wird anschließend eine Lösung von Dichloro-[bis($\eta^5$-2-methyl-4,5-benzo-1H-inden-1-yliden)methyl(3-propenyl)silan]zirconium (2.6 g; 4.4 mmol) in Toluol gegeben. Man läßt 12 h bei Raumtemperatur nachrühren. Von der klaren Lösung wird unter Vakuum das Lösungsmittel bis zur beginnenden Trübung entfernt und anschließend die Suspension bei -30 °C zur Kristallisation gelagert. Nach Filtration und Waschen mit Pentan erhält man 3.3 g (63 %) Tetrachloro-[1-[bis($\eta^5$-2-methyl-4,5-benzo-1H-inden-1-yliden)methylsilyl]-8-($\eta^5$-cyclopenta-2, 4-dien-1-yliden)-8-($\eta^5$-9H-fluoren-9-yliden)-4-isopino-camphyl-4-boranonan]di-zirconium als gelben Feststoff.

2. Tetrachloro-[1-[bis($\eta^5$-1H-inden-1-yliden)methylsilyl]-9-($\eta^5$-cyclopenta-2,4-dien-1-yliden)-9-($\eta^5$-9H-fluoren-9-yliden)-4-oxa-5-sila-octan]di-zirconium

In Gegenwart eines mit Natriumionen beladenen Kationenaustauschers wird eine Lösung von 3,0 g (5,4 mmol) Dichloro-[4-($\eta^5$-cyclopenta-2,4-dien-1-yliden)-4-($\eta^5$-9H-fluoren-9-yliden)-1-(chlordimethylsilyl)pentan]zirkonium in 40 ml THF mit einer Suspension von 2,7 g (5,4 mmol) Dichloro-[bis($\eta^5$-1H-inden-1-yliden)methyl(3-hydroxypropyl)silan]zirkonium in 40 ml THF bei 45 °C umgesetzt. Nach einer Stunde wird der Ionentauscher abfiltriert, das Lösungsmittel im Vakuum abgezogen und der Rückstand mit Methylenchlorid extrahiert. Bei -30 °C fällt das Produkt als orangegelber Feststoff aus. Man erhält 1,9 g (35 %) Tetrachloro-[1-[bis($\eta^5$-1H-inden-1-yliden)methylsilyl]-9-($\eta^5$-cyclopenta-2,4-dien-1-yliden)-9-($\eta^5$-9H-fluoren-9-yliden)-4-oxa-5-sila-octan]di-zirconium.

**Patentansprüche**

1. Metallocenverbindung mit mindestens zwei voneinander verschiedenen Metallocenfragmenten L-$MX_2$-L, welche die Formel I hat,

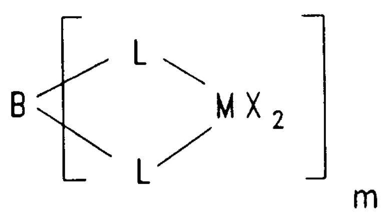

(I)

worin B eine Verbrückung bedeutet, m eine ganze Zahl von 2 bis 100 000 ist,

M ein Metallatom der Gruppe IVb, Vb oder VIb des Periodensystems der Elemente bedeutet,
X unabhängig voneinander in einem Metallocenfragment L-$MX_2$-L gleich oder verschieden sind und Wasserstoff, eine $C_1$-$C_{40}$-kohlenwasserstoffhaltige Gruppe, eine OH-Gruppe, ein Halogenatom oder ein Pseudohalogen bedeuten, L unabhängig voneinander in einem Metallocenfragment L-$MX_2$-L gleich oder verschieden sind und einen $\pi$-Liganden oder einen anderen Elektronendonor bedeuten.

2. Katalysatorkomponente, enthaltend mindestens eine Metallocenverbindung gemäß Anspruch 1 und mindestens einen Cokatalysator.

3. Katalysatorkomponente gemäß Anspruch 2 zusätzlich enthaltend einen Träger.

4. Verfahren zur Herstellung eines Olefinpolymers durch Polymerisation mindestens eines Olefins in Gegenwart eines Katalysators, welcher mindestens eine Metallocenverbindung und einen mindestens Cokatalysator enthält, dadurch gekennzeichnet, daß das Metallocen eine Verbindung der Formel I gemäß Anspruch 1 ist.

**5.** Verwendung einer Metallocenverbindungder Formel I gemäß Anspruch 1 zur Olefinpolymerisation.

**6.** Polyolefin, herstellbar nach dem Verfahren gemäß Anspruch 4.

Europäisches Patentamt

# EUROPÄISCHER RECHERCHENBERICHT

Nummer der Anmeldung
EP 96 10 5605

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| X | US-A-5 372 980 (STEPHEN C. DAVIS)<br>* das ganze Dokument *<br>--- | 1-6 | C07F17/00<br>C08F10/00 |
| X | EP-A-0 528 041 (MITSUI TOATSU CHEMICALS, INC.)<br>* das ganze Dokument *<br>--- | 1-6 | |
| P,X | EP-A-0 654 476 (HOECHST AG)<br>* das ganze Dokument *<br>----- | 1-6 | |

RECHERCHIERTE SACHGEBIETE (Int.Cl.6)
C07F
C08F

Der vorliegende Recherchenbericht wurde für alle Patentansprüche erstellt

| Recherchenort | Abschlußdatum der Recherche | Prüfer |
|---|---|---|
| DEN HAAG | 4.Juli 1996 | Beslier, L |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
& : Mitglied der gleichen Patentfamilie, übereinstimmendes Dokument

EPO FORM 1503 03.82 (P04C03)